# EUROPÄISCHE PATENTSCHRIFT

(11) **EP 0 931 377 B1**
(45) Veröffentlichungstag und Bekanntmachung des Hinweises auf die Patenterteilung: **28.03.2001**
(21) Anmeldenummer: 97911136.6
(22) Anmeldetag: 07.10.1997
(51) Int. Cl.: H02P 7/622

(54) **DREHSTROMSTELLER MIT INTERRUPTGESTEUERTER PHASENANSCHNITTSTEUERUNG**
THREE-PHASE CURRENT REGULATOR WITH INTERRUPT-PERFORMED PHASE CONTROL
REGULATEUR DE COURANT TRIPHASE AVEC COMMANDE DE PHASE REALISEE PAR INTERRUPTION

(30) Priorität: 10.10.1996 DE 19641832
(43) Veröffentlichungstag der Anmeldung: 28.07.1999
(73) Patentinhaber: SIEMENS AKTIENGESELLSCHAFT, 80333 München (DE)
(72) Erfinder: FRITSCH, Andreas, D-92245 Kümmersbruck (DE); SEITZ, Johann, D-92224 Amberg (DE)
(86) Internationale Anmeldenummer: DE9702298
(87) Internationale Veröffentlichungsnummer: WO9816004

(56) Entgegenhaltungen:
- EP-A- 0 136 856
- EP-A- 0 347 702
- EP-A- 0 512 372
- KAR S C ET AL: "MICROPROCESSOR BASED INDUSTRIAL MOTOR CONTROL AND PROTECTION USING INTERRUPT" PROCEEDINGS OF THE INDUSTRY APPLICATIONS SOCIETY ANNUAL MEETING, HOUSTON, OCT. 4 - 9, 1992, Bd. 2, 1.Januar 1992, INSTITUTE OF ELECTRICAL AND ELECTRONICS ENGINEERS, Seiten 1736-1738, XP000334198

## Beschreibung

Die Erfindung bezieht sich auf einen Drehstromsteller zur Steuerung einer an ein Drehstromnetz angeschlossenen Last, mit einem Mikrocontroller, mit Spannungserfassungseinrichtungen, die den Spannungsnulldurchgängen in einzelnen Netzphasen zugeordnete Spannungsnulldurchgangssignale erzeugen, von denen der Mikrocontroller Zündsignale zur Ansteuerung von phasenbezogenen Halbleiterventilen ableitet. Weiterhin bezieht sich die Erfindung auf ein Verfahren zur Phasenanschnittsteuerung eines Drehstromstellers.

Ein gattungsgemäßer Drehstromsteller ist in der EP 0 435 038 B1 offenbart. Hier wird der Zündzeitpunkt der Halbleiterventile für die Realisierung einer Phasenanschnittsteuerung aus der zeitlichen Differenz zwischen dem Spannungsnulldurchgang einer Phase des Drehstromnetzes und dem Sperren des dieser Phase zugehörigen Halbleiterventils abgeleitet.

Aus der britischen Patentschrift 2 084 359 ist eine Vorrichtung zur Steuerung eines Drehstromasynchronmotors bekannt. Dazu sind im Motor für jede Versorgungsphase steuerbare Halbleiterventile, insbesondere ein Triac oder antiparallel angeordnete Thyristoren zugeordnet, die über eine Phasenanschnittsteuerung eine gesteuerte Leistungszufuhr des Motors ermöglichen. Als Zeitreferenz für die Ermittlung der Zündzeitpunkte der Halbleiterventile wird bei der bekannten Vorrichtung der Zeitpunkt des Stromnulldurchgangs verwendet, der durch Messsung der über den Halbleiterventil anliegenden Spannung ermittelt wird. Diese Spannung wird einem Komparator zugeleitet, dessen Ausgangszustände den Schaltzuständen des Halbleiterventils entsprechen. Der Stromnulldurchgang korrespondiert dann zu einer Flanke des Ausgangssignals des Komparators, aus der mit Hilfe eines Monoflops ein Abtastimpuls für eine mit dem Nulldurchgang der Versorgungsspanung synchronisierte Rampenspannung erzeugt wird. Der abgetastete Wert der Rampenspannung wird von einer extern über ein Potentiometer eingegebenen Referenzspannung subtrahiert und auf den invertierenden Eingang eines Differenzverstärkers gegeben. Dessen Ausgangsspannung wird zusammen mit der Rampenspannung in einem weiteren Komparator zugeführt, der über einen nachgeschalteten Triggerimpulsgenerator ein primäres Zündsignal erzeugt, wenn die Rampenspannung die Ausgangsspannung des Differenzverstärkers überschreitet.

Zur Ableitung des Zündzeitpunktes für die Halbleiterventile in Drehstromstellern wird bei den bekannten Lösungen meist von den Stromnulldurchgängen oder einer Kombination aus Spannungs- und Stromnulldurchgängen in den einzelnen Phasen ausgegangen. Bei der Ermittlung des Stromnulldurchgangs wird in der Regel die Spannung über dem Halbleiterventil ausgewertet und ein Signal EIN oder AUS abgeleitet. Dabei ist die Verwendung der Spannung über dem Halbleiterventil als problematisch anzusehen, da diese Spannung die Differenz zwischen den Netzspannungen und der induzierten Motorspannung ist. Bei Spannungseinbrüchen in der Netzspannung kann diese Differenz z.B. gegen Null streben, was dann zur Folge hat, daß der Stromnulldurchgang nicht erfaßt wird.

Der Erfindung liegt die Aufgabe zugrunde, einen Drehstromsteller der oben genannten Art zu schaffen, der besonders einfach, d.h. mit kostengünstigen Komponenten aufgebaut werden kann. Außerdem besteht die Aufgabe, ein Verfahren zur Phasenanschnittsteuerung eines Drehstromstellers der oben genannten Art anzugeben, das einen Hardwareaufbau mit geringen Kosten ermöglicht.

Die erste Aufgabe wird dadurch gelöst, daß die Spannungsnulldurchgangssignale Rechtecksignale sind, deren Flanken zur Interruptsteuerung eines Ablaufprogramms im Mikrocontroller verwendet werden, wobei die der Interruptsteuerung zugeordneten Interruptroutinen im Ablaufprogramm die Zeitpunkte zur Abgabe der Zündsignale ausschließlich ausgehend von den Spannungsnulldurchgängen als Information über das Drehstromnetz steuern.

Eine besonders einfache Weiterbildung der Erfindung besteht, wenn lediglich zwei Spannungserfassungseinrichtungen vorgesehen sind, die als Spannungsnulldurchgangssignale zweier Netzphasen Rechtecksignale erzeugen, deren Flanken zur Interruptsteuerung durch den Mikrocontroller verwendet werden. Der hierfür erforderliche Mikrocontroller ist noch einfacher aufgebaut, da er lediglich zwei Interrüpteingänge, drei Portleitungen und zwei Timer benötigt.

Wird ein aus den Rechtecksignalen in einer Logik gebildetes Sammel-Interrupt-Signal dem Mikrocontroller zur Interruptsteuerung zugeführt, so genügt zur Realisierung ein Mikrocontroller mit nur einem Interrupteingang.

Weitere vorteilhafte Ausbildungen des erfindungsgemäßen Drehstromstellers sind den Unteransprüchen 4 bis 7 zu entnehmen.

Zur Lösung der weiteren Aufgabe wird das Verfahren gemäß Anspruch 8 vorgeschlagen.

Ein Ausführungsbeispiel der Erfindung wird im folgenden anhand einer Zeichnung näher erläutert. Es zeigen:
- FIG 1: ein vereinfachtes Schaltbild eines Drehstromsteller zur Steuerung, z.B. eines Drehstromasynchronmotors,
- FIG 2: zeitliche Verläufe von Netzgrößen und Signalen im Zusammenhang mit dem Drehstromsteller gemäß FIG 1,
- FIG 3: die Initialisierungsroutine mit Endlosschleife des beim Drehstromsteller gemäß FIG 1 verwendeten interruptgesteuerten Verfahrens zur Steuerung des Drehstromstellers,
- FIG 4: die Spannungsnulldurchgangs-Interruptroutine des interruptgesteuerten Verfahrens zur Steuerung des Drehstromstellers,
- FIG 5,6 und 7: Timer-Interruptroutinen des interruptgesteuerten Verfahrens zur Steuerung des Drehstromstellers,
- FIG 8: eine vereinfachte Darstellung einer Schaltung eines Drehstromstellers mit zwei Spannungsnulldurchgangserfassungseinrichtungen,
- FIG 9: Netzgrößen sowie Signale im Zusammenhang mit dem Betrieb des Drehstromstellers gemäß FIG 8,
- FIG 10: die Initialisierungsroutine mit Endschleife des interruptgesteuerten Verfahrens zur Steuerung des Drehstromstellers gemäß FIG 8,
- FIG 11 und 12: die Spannungsnulldurchgangs-Interruptroutinen des interruptgesteuerten Verfahrens zur Steuerung des Drehstromstellers gemäß FIG 8,
- FIG 13: die Zündungsroutine des interruptgesteuerten Verfahrens zur Steuerung des Drehstromstellers gemäß FIG 8 und
- FIG 14 und 15: Timer-Interruptroutinen des interruptgesteuerten Verfahrens zur Steuerung des Drehstromstellers gemäß FIG 8.

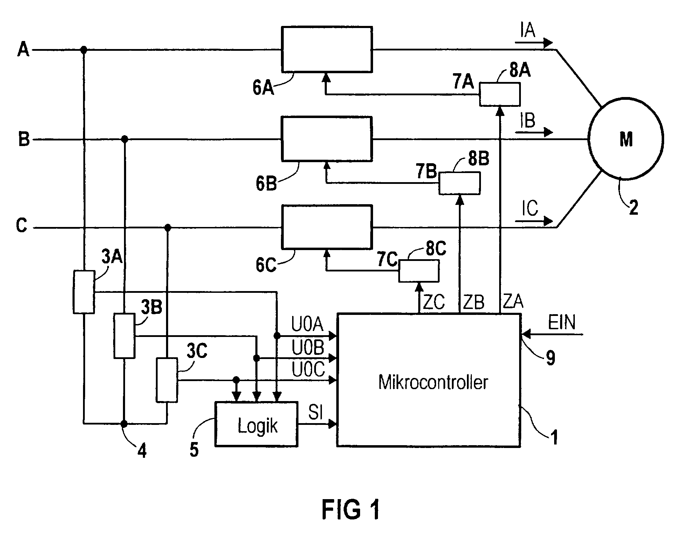

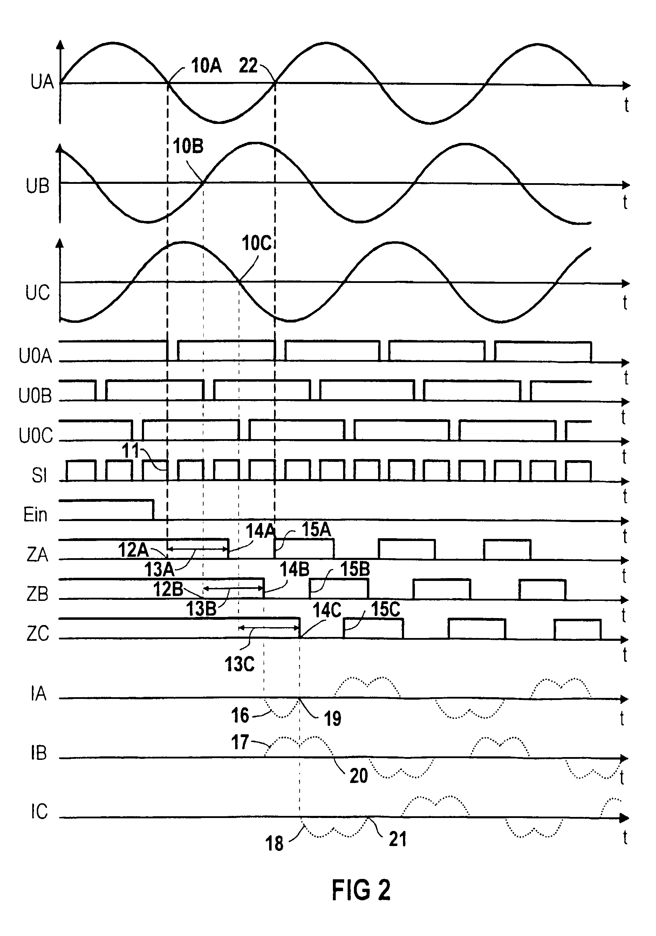

FIG 1 zeigt ein vereinfachtes Schaltbild eines erfindungsgemäßen Drehstromstellers, mit dem eine an drei Netzphasen A,B und C eines Drehstromnetzes angeschlossene Last, beispielsweise ein Drehstromasynchronmotor 2, steuerbar ist. Dabei sind in den Zuleitungen der drei Netzphasen A,B und C zur Last 2 jeweils ein Halbleiterventil 6A, 6B bzw. 6C, beispielsweise ein Triac oder eine Thyristorschaltung, bestehend aus zwei antiparallelgeschalteten Thyristoren, eingesetzt. Die Halbleiter-Ventile 6A, 6B und 6C sind über Steuerleitungen 7A, 7B und 7C mit Zündeinrichtungen 8A, 8B und 8C verbunden. Ein Mikrocontroller 1 ist über Signalleitungen an die Zündeinrichtungen 8A, 8B und 8C angeschlossen. Durch Abgabe von Zündsignalen ZA, ZB und ZC des Mikrocontrollers 1 über die Signalleitungen an die Zündeinrichtungen 8A, 8B und 8C lassen sich die Halbleiter-Ventile 6A, 6B und 6C ansteuern, d.h. direkt ein- und ausschalten. Im vorliegenden Ausführungsbeispiel sind die Zündsignale ZA, ZB und ZC zwar low-aktiv, d.h. der Low-Pegel 0 der Signalleitungen entspricht dem Zustand EIN und der High-Pegel 1 entspricht dem Zustand AUS, jedoch ist ebenfalls auch eine Ausführung mit high-aktiven Zündsignalen ZA, ZB und ZC denkbar. Der Mikrocontroller 1 weist mindestens einen Interrupteingang, sieben Portleitungen und drei Timer auf. Die drei zeichnerisch nicht dargestellten Timer des Mikrocontrollers 1 werden für die getrennte und unabhängige Realisierung des Phasenanschnitts in den Netzphasen A, B und C benötigt, wobei jeder der drei Netzphasen A, B und C jeweils ein Timer fest zugeordnet ist. Als Phasenanschnitt wird dabei ein definierter zeitlicher Verzug vom Spannungsnulldurchgang in einer Netzphase A, B oder C des angeschlossenen Drehstromnetzes bis zum Einschalten des Halbleiter-Ventils 6A, 6B oder 6C in der betreffenden Netzphase verstanden, wie in der nachstehend erläuterten FIG 2 dargestellt. An die Netzphasen A, B und C geschaltete Spannungsnulldurchgangserfassungseinrichtungen 3A, 3B und 3C dienen zur Erfassung der Spannungsnulldurchgänge der Spannungen UA, UB, UC der einzelnen Netzphasen A, B und C bezogen auf einen künstlichen Sternpunkt 4, in dem die Spannungsnulldurchgangserfassungseinrichtungen 3A, 3B und 3C miteinander verbunden sind. Die Spannungsnulldurchgangserfassungseinrichtungen 3A, 3B und 3C sind dabei so ausgeprägt, daß sie bei Spannungswerten oberhalb einer positiven Spannungsreferenz bzw. unterhalb einer negativen Spannungsreferenz ein High-Signal liefern und beim Nulldurchgang der Spannungen in den einzelnen Netzphasen A, B oder C, d.h. beim Unterschreiten des positiven Referenzwertes bzw. beim Überschreiten des negativen Referenzwertes ein Low-Signal liefern. Die Spannungsnulldurchgangserfassungseinrichtungen 3A, 3B und 3C bilden Spannungsnulldurchgangssignale U0A, U0B und U0C. Diese werden einerseits dem Mikrocontroller 1 und andererseits einer Logik 5 zugeführt, die diese drei Spannungsnulldurchgangssignale U0A, U0B und U0C zu einem Sammelinterrupt-Signal SI zusammenfaßt, das auf den Interrupteingang des Mikrocontrollers 1 geführt wird. Der Interrupteingang des Mikrocontrollers 1 ist dabei negativ flanken-getriggert ausgeführt, so daß bei jeder negativen Flanke im Sammelinterrupt-Signal SI ein als "Spannungsnulldurchgangsinterrupt" bezeichneter Interrupt innerhalb des Ablaufprogramms im Mikrocontroller 1 ausgelöst wird. Es ist jedoch auch grundsätzlich eine positive Flankentriggerung möglich.

In FIG 2 sind die zeitlichen Verläufe von Netzgrößen und Signalen dargestellt, die für das Verständnis des interruptgesteuerten Verfahrens zur Steuerung eines erfindungsgemäßen Drehstromstellers von Interesse sind. Die drei oberen Verläufe geben die an den Spannungsnulldurchgangserfassungseinrichtungen 3A, 3B und 3C anliegenden Spannungen UA, UB und UC der einzelnen Netzphasen A, B und C wieder. Darunter sind die entsprechenden, von den Spannungsnulldurchgangserfassungseinrichtungen 3A, 3B und 3C erzeugten rechteckförmigen Spannungsnulldurchgangssignale U0A, U0B und U0C dargestellt. Mit SI ist das in der Logik 5 gebildete Sammelinterrupt-Signal bezeichnet. Ausgehend von den negativen Flanken 11 des Sammelinterrupt-Signals SI wird nach Zuordnung zu der jeweils dem Spannungsnulldurchgang aufweisenden Netzphase A, B oder C, d.h. zum Spannungsnulldurchgangssignal U0A, U0B oder U0C nach Ablauf eines vorgegebenen Zeitwertes 13A, 13B bzw. 13C in den Zeitpunkten 14A, 14B, 14C in den betreffenden Phasen ein Zündsignal abgegeben wie aus den mit ZA, ZB und ZC dargestellten Verläufen ersichtlich ist. Hieraus ergeben sich die mit IA, IB und IC bezeichneten Stromverläufe.

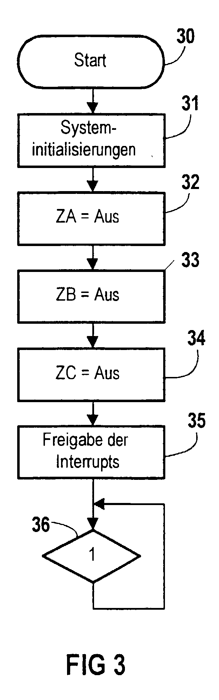

Das im Mikrocontroller 1 des Drehstromstellers enthaltene Ablaufprogramm arbeitet mit einem interruptgesteuerten Verfahren. Dieses beginnt mit einer Initialisierungsroutine gemäß FIG 3, die den Ablauf im Mikrocontroller 1 vom Einschalten der Versorgungsspannung des Mikrocontrollers 1, im Diagramm als Start 30 bezeichnet bis zum Aufruf einer Endlosschleife 36 wiedergibt. Nach dem Start werden zunächst alle für das Verfahren notwendigen Systeminitalisierungen durchgeführt, was im Block 31 hinterlegt ist. Im Anschluß daran werden alle drei Zündsignale ZA, ZB und ZC auf den definierten Ausgangszustand AUS gesetzt gemäß den Blöcken 32, 33 und 34. Erst danach werden im Block 35 die für das Verfahren verwendeten Interrupts des Mikrocontrollers 1 freigegeben. Der Interruptfreigabe schließt sich direkt die Endlosschleife 36 an, in die das interruptgesteuerte Verfahren eingebettet ist und die bis zum Abschalten der Versorgungsspannung des Mikrocontrollers 1 durchlaufen wird.

Der Ablauf des interruptgesteuerten Verfahrens zur Phasenanschnittsteuerung wird im folgenden beispielhaft für die Netzphase A beschrieben. Die Phasenanschnittsteuerungen in den Netzphasen B und C werden in entsprechender Weise durchgeführt.

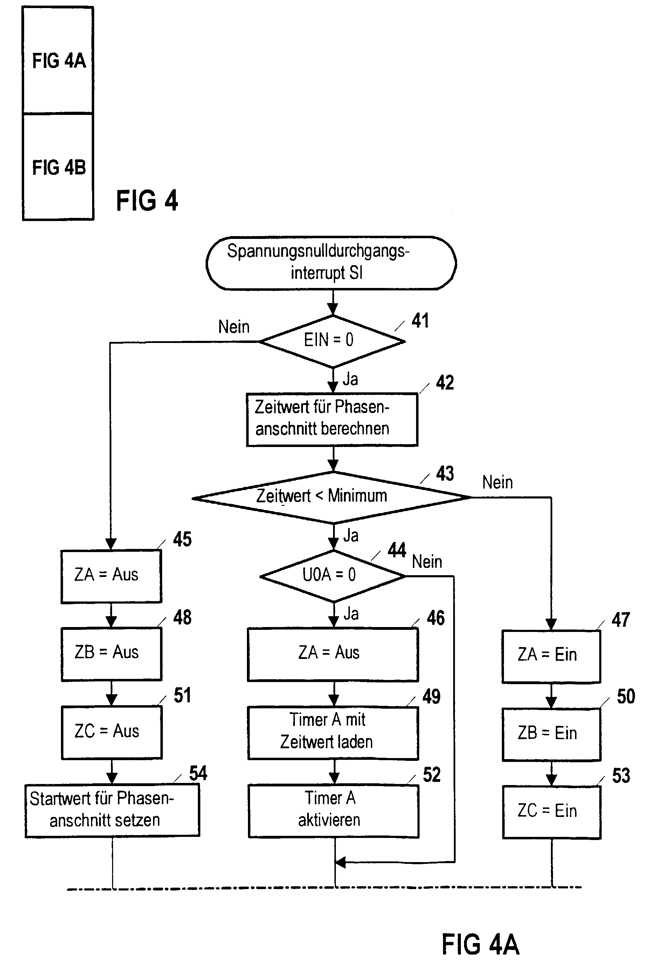

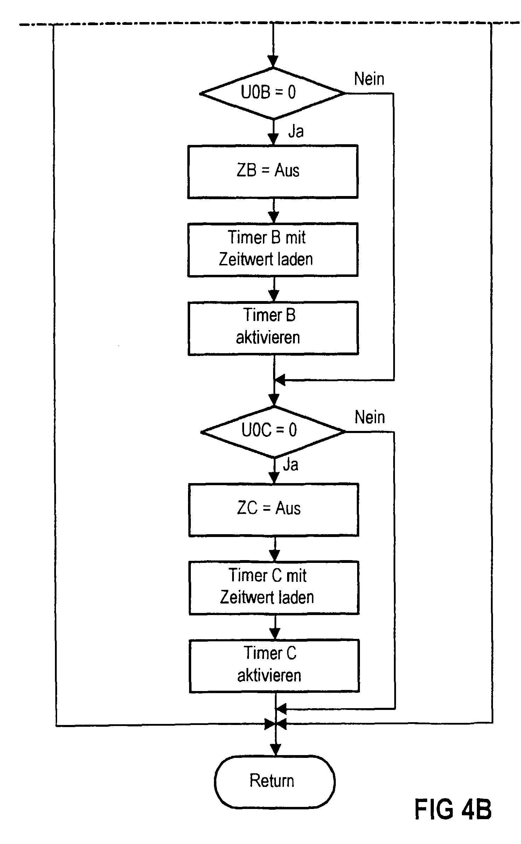

Das interruptgesteuerte Verfahren wird durch die in FIG 2 mit 11 gekennzeichnete negative Flanke im Sammelinterrupt-Signal SI mit der Spannungsnulldurchgangs-Interruptroutine gemäß FIG 4 im Mikrocontroller 1 eingeleitet. In der Spannungsnulldurchgangsinterruptroutine wird im Block 41 zunächst der Zustand des Steuereingangssignales EIN in FIG 1 mit 9 bezeichnet, ausgewertet. Bei einem aktivierten Steuereingangssignal, d.h. EIN = 0, wird im Block 42 der einem vorgegebenen Phasenanschnittwert korrespondierende Zeitwert berechnet. Dieser wird anschließend im Block 43 auf einen Minimalwert geprüft, der den Zeitpunkt für die Beendigung der Phasenanschnittsteuerung bestimmt. Die Verzweigung zur Beendigung der Phasenanschnittsteuerung wird am Ende der Beschreibung erläutert. Davon ausgehend, daß die Minimalwertprüfung ein positives Ergebnis liefert, wird im nächsten Schritt der Spannungsnulldurchgangsinterruptroutine im Block 44 über die Bedingung UOA = 0 die Zuordnung zwischen dem auslösenden Interruptereignis, nämlich der durch 11 gekennzeichneten negativen Flanke im Sammelinterruptsignal SI und dem durch 10A gekennzeichneten Spannungsnulldurchgang in der Netzspannung UA durchgeführt. Nach Bestätigung dieser Zuordnung wird im Block 46 das Zündsignal ZA für die Netzphase A ausgeschaltet. Beim ersten Phasenanschnitt nach der Aktivierung des Verfahrens durch den Steuereingang EIN, gekennzeichnet durch das Bezugszeichen 9, wäre das Ausschalten des Zündsignales ZA zu diesem Zeitpunkt, der in der FIG 2 mit 12A bezeichnet ist, zwar nicht zwingend notwendig, da sich das Zündsignal ZA durch die Zuweisung in der Initialisierungsroutine vor dem ersten Phasenanschnitt bereits im ausgeschalteten Zustand befindet, jedoch wird zur Vereinfachung der Software-Steuerungsstruktur das Ausschalten des Zündsignales ZA, bzw. ZB und ZC beim ersten Phasenanschnitt auch durchgeführt.

Nach dem Ausschalten des Zündsignales ZA wird im Block 49 der der Netzphase A zugeordnete Timer mit dem zuvor berechneten Zeitwert geladen, in dem nachfolgenden Block 52 aktiviert und anschließend die Spannungsnulldurchgangsinterruptroutine über die nicht gleichzeitig erfüllbaren Abfragen U0B = 0 und U0C = 0 wieder verlassen.

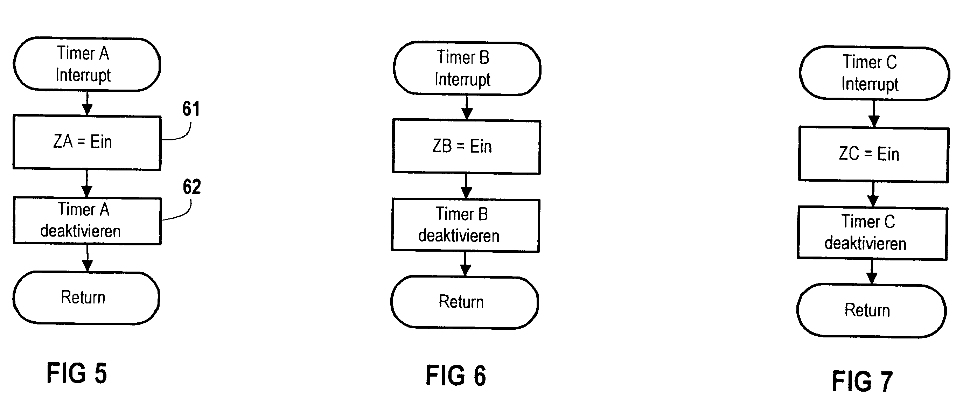

Nach dem Ablauf des in den Timer für die Netzphase A geladenen Zeitwertes, in FIG 2 mit 13A bezeichnet, löst dieser einen Interrupt aus, und es erfolgt vom Mikrocontroller 1 aus eine Verzweigung in eine Timer-Interruptroutine für die Netzphase A gemäß FIG 5. In dieser wird im Block 61 das Zündsignal ZA eingeschaltet, wodurch über die Zündeinrichtung 8A und die Verbindungsleitung 7A das Halbleiterventil 6A in der Netzphase A gezündet wird. Dieser Zeitpunkt der Einschaltung des Zündsignales ZA ist im zeitlichen Verlauf in FIG 2 mit 14a gekennzeichnet. Vor dem Verlassen dieser Timer-Interruptroutine wird im Block 62 der Timer wieder deaktiviert.

Das Zündsignal ZA der Netzphase A bleibt bis zum darauffolgenden, hier in FIG 2 durch 22 gekennzeichneten Spannungsnulldurchgang der Spannung UA eingeschaltet. Die zugehörige Ausschaltung des Zündssignales ZA zum Zeitpunkt 15A erfolgt in der von diesem Spannungsnulldurchgang ausgelösten Spannungsnulldurchgangs-Interruptroutine unmittelbar bevor der zugehörige Timer gemäß Block 49 mit dem nächstfolgenden Phasenanschnittwert bzw. dem entsprechenden Zeitwert geladen wird. Aus der Wiederholung des beschriebenen Ablaufes resultiert der in FIG 2 dargestellte zeitliche Verlauf für das Zündsignal ZA des Halbleiterventils 6A.

Der für die Netzphase A beschriebene interruptgesteuerte Ablauf der Phasenanschnittsteuerung wird in gleicher Weise für die Netzphasen B und C durchgeführt. Hieraus resultieren die entsprechenden zeitlichen Verläufe für die Zündsignale ZB und ZC der Halbleiterventile 6B und 6C gemäß FIG 2.

In einem Drehstromsystem ohne Nulleiter müssen zum Stromfluß mindestens zwei Phasen gleichzeitig leitend sein, d.h. eine entsprechende zeitliche Überlappung von zwei Zündsignalen ZA, ZB, ZC ist erforderlich. Nach der in FIG 2 dargestellten Phasenfolge des Drehstromnetzes ergibt sich der erste Stromfluß nach dem Einschalten des Halbleiterventils 6B in der Netzphase B durch das Zündsignal ZB zum Zeitpunkt 14B. Vom Zeitpunkt 14B im Verlauf von ZB bis zum Zeitpunkt 15A im Verlauf von ZA ergibt sich eine zeitliche Überlappung der eingeschalteten Zündsignale ZA und ZB, die die Stromverläufe IA und IB mit den Stromkuppen 16 und 17 in den Netzphasen A und B hervorruft.

Die nächste zeitliche Überlappung zweier eingeschalteter Zündsignale ergibt sich vom Zeitpunkt 14C im Verlauf von ZC bis zum Zeitpunkt 15B im Verlauf von ZB, aus der die rechte Hälfte des durch 17 gekennzeichneten Stromflusses in der Netzphase B und die linke Hälfte des im Verlauf von IC durch 18 gekennzeichneten Stromflusses in der Netzphase C resultiert. Die Aufteilung der Stromverläufe in zwei Abschnitte wird durch die vom Phasenanschnitt abhängige Kommutierung des Stromflusses von einem Phasenpaar zu einem anderen Phasenpaar hervorgerufen. Bei dem durch 17 gekennzeichneten Stromfluß kommutiert der Strom im Drehstromsystem, z.B. durch das Einschalten des Zündsignales ZC für die Netzphase C zum Zeitpunkt 14C, von dem Phasenpaar AB auf das Phasenpaar BC.

Um eine zeitliche Überlappung zweier eingeschalteter Zündsignale zu erreichen, muß das Einschalten des Zündsignales der zweiten beteiligten Netzphase, z.B. zum Zeitpunkt 14B, stets vor dem Ausschalten des Zündsignales der als erstes eingeschalteten Netzphase, z.B. zum Zeitpunkt 15A, erfolgen. Um diese Bedingung zu erfüllen, muß der Phasenanschnittwert immer kleiner 120° elektrisch sein. Dies wird aus der Tatsache offensichtlich, daß z.B. bei einem symmetrischen Drehstromnetz das Laden des Timers mit dem Zeitwert 13B für den Phasenanschnitt der zweiten beteiligten Netzphase zum Zeitpunkt 12B immer 60° nach dem Laden des Zeitwertes 13A für den Phasenanschnittwert der ersten beteiligten Netzphase zum Zeitpunkt 12A erfolgt und daß das Ausschalten des Zündsignals ZA der als erstes eingeschalteten Netzphase A zum Zeitpunkt 15A immer 180° nach dem Zeitpunkt 12A erfolgt.

Das Ende des Stromflusses innerhalb einer Netzphase, in FIG 2 z.B. durch 19, 20 und 21 gekennzeichnet, erfolgt aufgrund des induktiven Anteils bei angeschlossenen Motorwicklungen nie zeitgleich oder zeitlich vor dem Ausschalten des Zündsignals dieser Nutzphase, z.B. in den Zeitpunkten 15A, 15B oder 15C, sondern immer zeitlich verzögert gegenüber der Zündsignalausschaltung. Bedingt durch diese Eigenschaft der Stromverläufe und der Abschaltung des Zündsignales für das Halbleiterventil bei jedem auftretenden Spannungsnulldurchgang in einer Netzphase kann eine Doppel- oder Vielzündung innerhalb einer Halbwelle einer Netzphase, die z.B. durch den Anfangszeitpunkt 10A und den Endzeitpunkt 22 im Verlauf der Phasenspannung UA gekennzeichnet ist, praktisch ausgeschlossen werden. Die Dauer der zeitlichen Verzögerung des Stromflußendes gegenüber der Ausschaltung des Zündsignales ist dabei abhängig von dem induktiven Anteil der Motorwicklung, der sich beim Hochlauf des angeschlossenen Motors vom Stillstand bis zur Nenndrehzahl dynamisch verändert.

Der beschriebene Ablauf der interruptgesteuerten Phasenanschnittsteuerung wiederholt sich jeweils mit einem um eine vorgegebene Schrittweite verringerten Phasenanschnittwert solange, bis der dem Phasenanschnittwert korrespondierende Zeitwert einen festvorgegebenen Minimalwert unterschreitet, was in der Spannungsnulldurchgangs-Interruptroutine gemäß FIG 4 im Block 43 geprüft wird. Dabei läuft z.B. ein angeschlossener Motor 2 als Last vom Stillstand sanft bis zur Nenndrehzahl hoch, wobei über die Wahl der Schrittweite bei der Reduzierung des Phasenanschnittwertes die Sanftanlaufzeit des Motors 2 verändert werden kann. Nach dem Erreichen des festvorgegebenen Minimalwertes für den Phasenanschnitt, der so gewählt ist, daß der angeschlossene Motor 2 bis zum Erreichen dieses Minimalwertes sicher hochgelaufen ist, werden die drei Halbleiterventile 6A, 6B und 6C durch das direkte Einschalten der Zündsignale ZA, ZB und ZC in den Blöcken 47, 50 und 53 ohne Phasenanschnitt angesteuert.

Durch Belegen des Steuereingangs EIN des Mikrocontrollers 1, gekennzeichnet in FIG 1 durch das Bezugszeichen 9, mit dem Wert 1 kann der Motor während des Sanftanlaufes oder in der direkten Ansteuerung ohne Phasenanschnitt jederzeit ausgeschaltet werden. Dabei werden in den Blöcken 45, 48 und 51 alle drei Zündsignale ZA, ZB und ZC direkt ausgeschaltet und in Block 54 der Phasenanschnittwert für den nächsten Sanftanlauf auf den vorgegebenen Startwert für den Phasenanschnitt zurückgesetzt.

Da die Zündsignale ZA, ZB und ZC für die einzelnen Netzphasen A, B und C aufgrund der direkten Ableitung aus den Spannungsnulldurchgängen 10A, 10B und 10C der Phasenspannungen UA, UB und UC immer automatisch der durch das Drehstromsystem vorgegebenen Phasenfolge folgen müssen, ist das hier vorgestellte interruptgesteuerte Verfahren zur Phasenanschnittsteuerung drehsinnunabhängig.

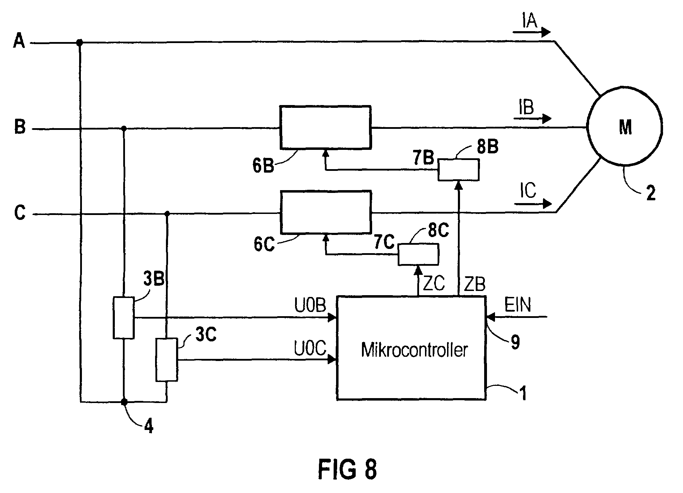

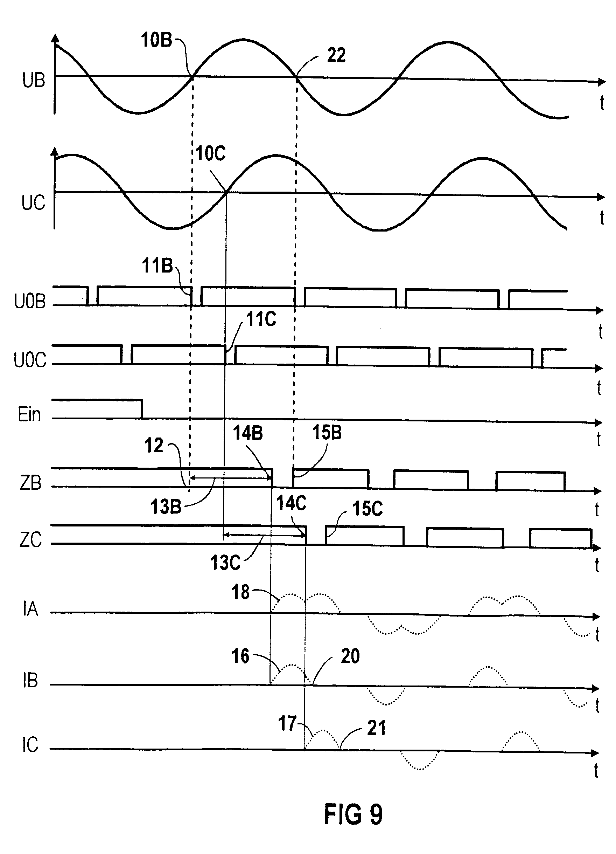

Ein zweites Ausführungsbeispiel der Erfindung wird im folgenden anhand der weiteren Figuren 8, 9, 10, 11, 12, 13, 14 und 15 erläutert. Die Phasenanschnittsteuerung erfolgt hier mit zwei Halbleiterventilen 6B und 6C in den Netzphasen B und C. Der Drehstromsteller arbeitet hier mit zwei Spannungsnulldurchgangserfassungseinrichtungen 3B und 3C, die zwischen die Netzphasen B und C einerseits sowie einen künstlichen Sternpunkt 4 andererseits geschaltet sind, wobei der Sternpunkt 4 an die Netzphase A angebunden ist. Die durch die Spannungsnulldurchgangserfassungseinrichtungen 3B und 3C gebildeten Spannungsnulldurchgangssignale U0B und U0C sind hier direkt auf Interrupteingänge des Mikrocontrollers 1 geführt. Der Mikrocontroller 1 muß in dieser Ausführungsform mindestens zwei Interrupteingänge, drei Portleitungen und zwei Timer enthalten. Die Schaltung für zweiphasige Steuerungen eines Drehstromstellers gemäß FIG 8 ist ansonsten grundsätzlich gleich aufgebaut wie die dreiphasige Steuerung gemäß FIG 1. Die zwei Timer werden für die getrennte und unabhängige Realisierung des Phasenanschnitts in den beiden gesteuerten Netzphasen B und C benötigt. Dabei ist jeder der beiden gesteuerten Netzphasen B und C ein Timer fest zugeordnet. Als Phasenanschnitt wird dabei ein definierter zeitlicher Verzug vom Spannungsnulldurchgang einer Netzphase B oder C des Drehstromnetzes bis zum Einschalten des Halbleiterventils 6B oder 6C verstanden wie er z.B. in den Signalverläufen ZB und ZC in FIG 9 durch 13A und 13B gekennzeichnet ist.

In FIG 9 sind die Zeitverläufe der an den Spannungsnulldurchgangserfassungseinrichtungen 3B und 3C anliegenden Spannungen UB und UC dargestellt. Darunter sind die durch die Spannungsnulldurchgangserfassungseinrichtungen 3B und 3C gebildeten Spannungsnulldurchgangssignale U0B und U0C aufgezeichnet. Ihre negativen Flanken sind mit 11B und 11C bezeichnet. Darunter folgt das EIN-Signal, mit dem über den low-aktiven Steuerungseingang 9 des Mikrocontrollers 1 das zweiphasige interruptgesteuerte Verfahren zur Phasenanschnittsteuerung jederzeit aktiviert bzw. deaktiviert werden kann. Die zwei folgenden Verläufe geben die Zündsignale ZB und ZC wieder. IA, IB und IC stellen die Stromverläufe in den Netzphasen A, B und C dar.

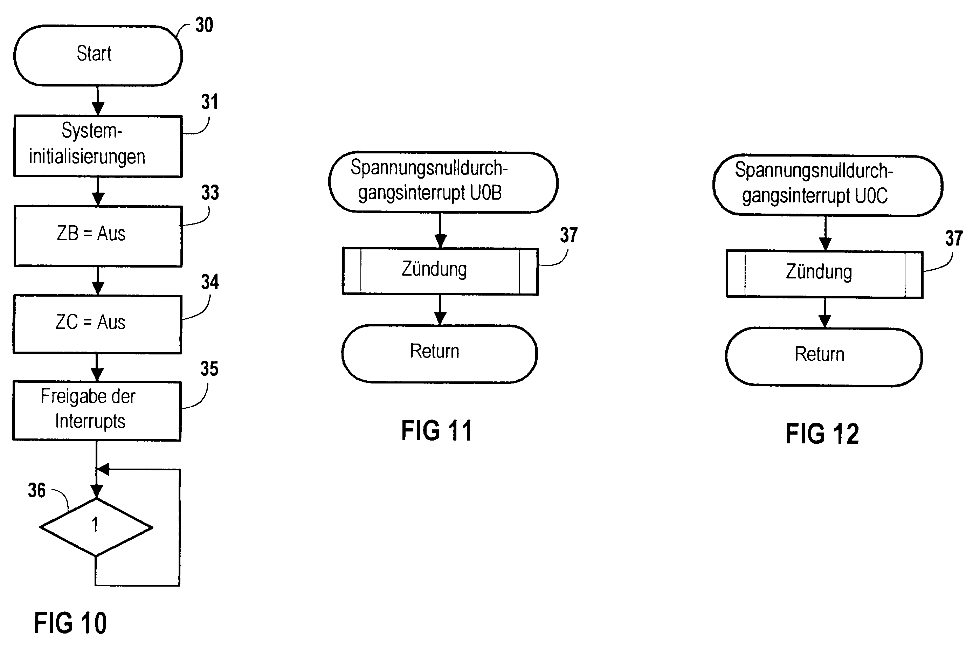

FIG 10 zeigt die Initialisierungsroutine des Mikrocontrollers 1. Diese Initialisierungsroutine enthält den Ablauf vom Einschalten der Versorgungsspannung des Mikrocontrollers 1, gekennzeichnet durch den Block 30, bis zum Aufruf einer Endlosschleife 36, in die das hier vorgestellte zweiphasige interruptgesteuerte Steuerungsverfahren eingebettet ist. Diese Initialisierungsroutine entspricht der bereits in FIG 3 gezeigten mit der Ausnahme, daß hier nur die beiden verwendeten Zündsignale ZB und ZC auf den definierten Ausgangszustand AUS gesetzt werden, bevor im Block 35 die für das Verfahren verwendeten Interrupts des Mikrocontrollers 1 freigegeben werden.

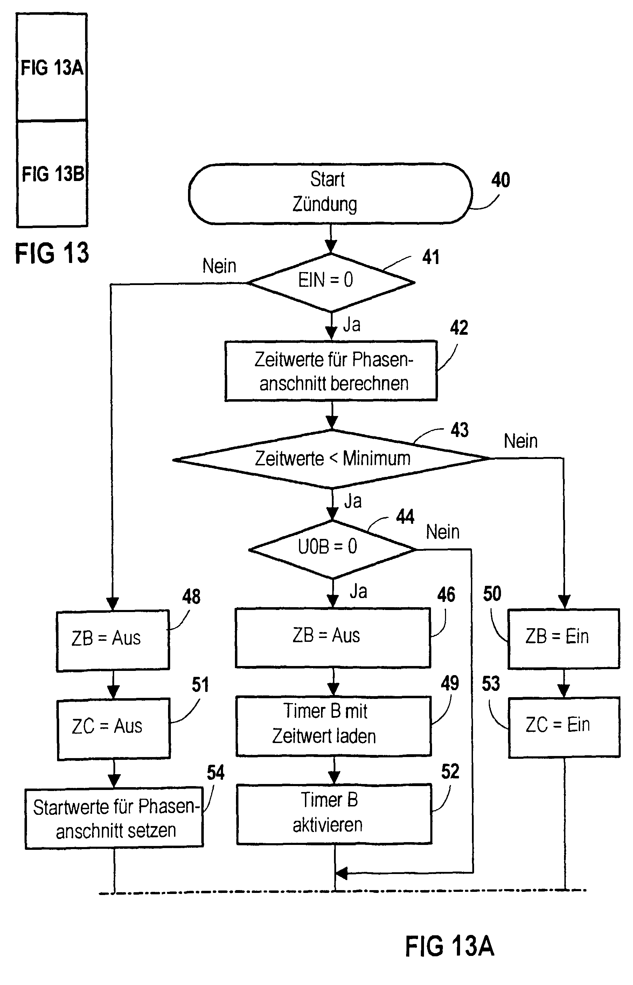

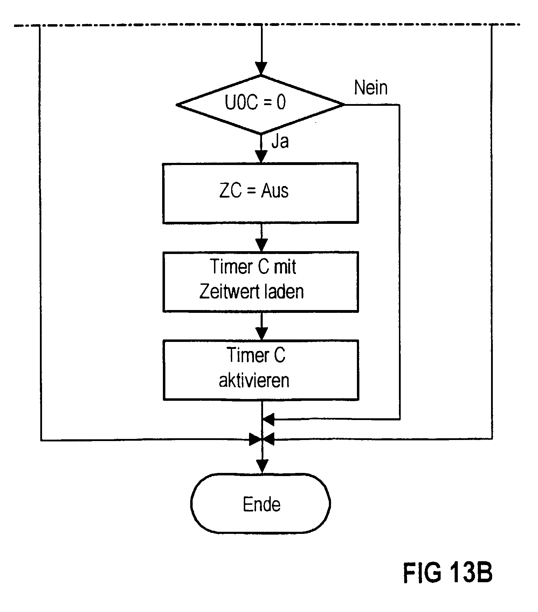

Die folgende Beschreibung des interruptgesteuerten Verfahrens zur Phasenanschnittsteuerung bezieht sich beispielhaft auf die Netzphase B. Durch die in FIG 9 mit 11B gekennzeichnete negative Flanke im Signalverlauf im Spannungsnulldurchgangssignal U0B wird der Spannungsnulldurchgangsinterrupt U0B gemäß FIG 11 im Mikrocontroller 1 ausgelöst. Die Flanke 11B wird dabei durch den Spannungsnulldurchgang 10B der Netzspannung UB hervorgerufen. Nach Verzweigung in die Spannungsnulldurchgangs-Interruptroutine wird in dieser im Block 37 die Routine "Zündung" aufgerufen und abgearbeitet, bevor von der Interruptroutine über die Return-Anweisung in die Endlosschleife des Mikrocontrollers 1 zurückgesprungen wird. In der Routine "Zündung" gemäß FIG 13 wird nach deren Start im Block 40 zunächst der Zustand des Steuereingangssignales EIN im Block 41 ausgewertet. Bei einem aktivierten Steuerungssignal EIN = 0 wird im Block 42 zunächst der einem vorgegebenen Phasenanschnittwert korrespondierende Zeitwert für die Netzphase B berechnet. Dieser Zeitwert wird in Block 43 auf einen Minimalwert geprüft, der den Zeitpunkt für die Beendigung der Phasenanschnittsteuerung, wie an späterer Stelle erläutert, bestimmt.

Im folgenden Schritt der Routine wird über die Bedingung UOB = 0 im Block 44 die Zuordnung der Netzphase B zum auslösenden Interruptereignis, gekennzeichnet durch die negative Flanke 11B im Spannungsnulldurchgangssignal U0B und dem durch 10B gekennzeichneten Spannungsnulldurchgang in der Netzphase B, durchgeführt. Nach dieser Zuordnung wird dann im Block 46 zunächst das Zündsignal ZB für die Netzphase B ausgeschaltet. Beim ersten Phasenanschnitt nach der Aktivierung des Verfahrens durch den Steuereingang EIN wäre das Schalten des Zündsignales ZB zum Zeitpunkt 12 zwar nicht zwingend notwendig, da sich das Zündsignal durch die Zuweisung im Block 33 vor dem ersten Phasenanschnitt im ausgeschalteten Zustand befindet, aber zur Vereinfachung der Software-Steuerungsstruktur wird das Ausschalten des Zündsignales ZB bzw. ZC auch beim ersten Phasenanschnitt durchgeführt.

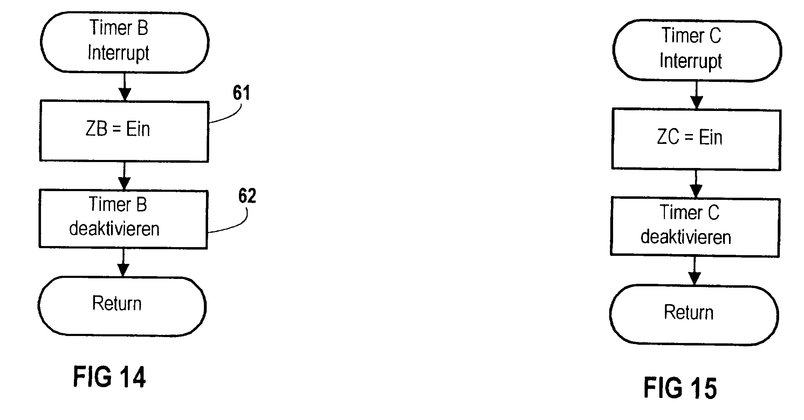

Nach dem Ausschalten des Zündsignales ZB wird in 49 der der Netzphase B zugeordnete Timer mit dem in Block 42 berechneten Zeitwert geladen, im Block 52 der Timer aktiviert und anschließend die Routine über die nicht gleichzeitig erfüllbare Abfrage U0C = 0 wieder verlassen. Nach dem Ablauf des in den Timer geladenen Zeitwertes 13B gemäß FIG 9 löst dieser einen Interrupt aus, woraufhin eine Verzweigung in die in FIG 14 dargestellte Timer-Interruptroutine erfolgt. In dieser wird im Block 61 das Zündsignal ZB eingeschaltet, wodurch über die Zündeinrichtung 8B und die Verbindungsleitung 7B des Halbleiterventils 6B in der Netzphase B gezündet wird. Dieser Zeitpunkt der Einschaltung des Zündsignales ZB ist im zeitlichen Verlauf von ZB in FIG 9 durch 14B gekennzeichnet. Vor dem Verlassen der Timer-Interruptroutine wird im Block 62 der Timer der betreffenden Netzphase wieder deaktiviert.

Das Zündsignal ZB bleibt dann stets bis zum darauffolgenden Spannungsnulldurchgang 22 gemäß FIG 9 eingeschaltet. Die zugehörige Ausschaltung des Zündssignals ZB zum Zeitpunkt 15B erfolgt dabei in der von der Spannungsnulldurchgangs-Interruptroutine UOB aufgerufenen Routine "Zündung" unmittelbar bevor der betreffende Timer im Block 49 mit dem nächstfolgenden Phasenanschnittwert geladen wird. Aus der Wiederholung des beschriebenen Ablaufes resultiert der in FIG 9 dargestellte zeitliche Verlauf für das Zündsignal ZB des Halbleiterventils 6B.

Dieser für die Netzphase B beschriebene interruptgesteuerte Ablauf zur Realisierung der Phasenanschnittsteuerung wird in gleicher Weise in der Netzphase C durchgeführt, mit dem einzigen Unterschied, daß der Spannungsnulldurchgangsinterrupt hier durch eine negative Flanke 11C im Spannungsnulldurchgangssignal U0C ausgelöst und in die in FIG 12 dargestellte Spannungsnulldurchgangs-Interruptroutine U0C verzweigt wird. Dort wird wiederum im Block 37 die Routine "Zündung" aufgerufen, und es wird der bereits beschriebene Ablauf für die Netzphase C durchgeführt. Hieraus resultiert der in FIG 9 dargestellte zeitliche Verlauf ZC für das Zündsignal des Halbleiterventils 6C.

Bei einer zweiphasig ausgeführten Phasenanschnittsteuerung wird eine Phase des an die Last angeschlossenen Drehstromnetzes nicht gesteuert und ist somit ständig leitend. Daher ist die Bedingung, daß bei einem Drehstromsystem ohne Nulleiter für einen Stromfluß in den Netzphasen mindestens zwei Netzphasen gleichzeitig leitend sein müssen, zu jedem Zeitpunkt der zweiphasig ausgeführten Phasenanschnittsteuerung erfüllt.

Im Gegensatz zur dreiphasig ausgeführten Phasenanschnittsteuerung entfällt somit bei einer zweiphasig ausgeführten Phasenanschnittsteuerung die Problematik der Anfangszündung, bei der durch steuerungstechnische Maßnahmen gewährleistet werden muß, das immer zwei Phasen gleichzeitig leitend sind, damit eine Stromfluß in den Phasen möglich wird.

In dem hier dargestellten Ausführungsbeispiel einer zweiphasigen Phasenanschnittsteuerung ist die Netzphase A des an die Last angeschlossenen Drehstromnetzes ständig leitend. Damit ergibt sich nach der in FIG 9 dargestellten Folge der Netzphasen B und C des Drehstromnetzes der erste Stromfluß nach dem Einschalten des Halbleiterventils 6B durch das Zündsignal ZB zum Zeitpunkt 14B. Diese erste Zündung zum Zeitpunkt 14B hat den im Verlauf von IB durch 16 gekennzeichneten Stromfluß in der Netzphase B zur Folge. Die zweite Zündung zum Zeitpunkt 14C in der Netzphase C ruft den im Verlauf von IC durch 17 gekennzeichneten Stromfluß in der Phase C hervor. Der resultierende Stromfluß der ungesteuerten Netzphase A, der im Verlauf von IA durch 18 gekennzeichnet ist, setzt sich dabei jeweils aus den Stromflußanteilen der gesteuerten Netzphasen B und C zusammen.

Das Ende des Stromflusses in einer gesteuerten Netzphase, z.B. durch 20 und 21 gekennzeichnet, erfolgt aufgrund des induktiven Anteils der angeschlossenen Motorwicklungen nie zeitgleich oder zeitlich vor dem Ausschalten des Zündsignals dieser Netzphase, z.B. zu den Zeitpunkten 15B oder 15C, sondern immer zeitlich verzögert gegenüber der Zündsignalausschaltung. Bedingt durch diese Eigenschaft der Stromverläufe und der Abschaltung des Zündsignals für ein Halbleiterventil bei jedem auftretenden Spannungsnulldurchgang in einer Netzphase kann eine Doppel- oder Vielzündung innerhalb einer Phasenhalbwelle, die z.B. durch den Anfangszeitpunkt 10B und den Endzeitpunkt 22 im Verlauf der Phasenspannung UB gekennzeichnet ist, praktisch ausgeschlossen werden. Die Dauer der zeitlichen Verzögerung des Stromflußendes gegenüber der Ausschaltung des Zündsignales ist dabei abhängig von dem induktiven Anteil der Motorwicklung, der sich beim Hochlauf des angeschlossenen Motors vom Stillstand bis zur Nenndrehzahl dynamisch verändert.

Durch eine Berechnung der Phasenanschnittwerte in den zwei gesteuerten Netzphasen nach unterschiedlich verlaufenden Funktionen kann die durch die zweiphasige Phasenanschnittsteuerung hervorgerufene Unsymmetrie in den Stromverläufen der drei Netzphasen beeinflußt werden.

Der beschriebene Ablauf der zweiphasigen interruptgesteuerten Phasenanschnittsteuerung wiederholt sich wie beim dreiphasigen jeweils mit um vorgegebene Schrittweiten verringerten Phasenanschnittwerten solange bis einer der beiden den Phasenanschnittwerten korrespondierenden Zeitwerte einen fest vorgegebenen Minimalwert unterschreitet. Der über die Halbleiterventile 6A und 6B zweiphasig angesteuerte Motor 2 läuft dabei vom Stillstand sanft bis zur Nenndrehzahl hoch, wobei über die Wahl der Schrittweiten bei der Reduzierung der Phasenanschnittwerte die Sanftanlaufzeit des Motors verändert werden kann. Nach dem Erreichen des fest vorgegebenen Minimalwertes für den Phasenanschnitt, der so gewählt ist, daß der angeschlossene Motor 2 bis zum Erreichen dieses Minimalwertes sicher hochgelaufen ist, werden die zwei Halbleiterventile 6A und 6B durch das direkte Einschalten der Zündsignale ZB und ZC in den Blöcken 50 und 53 ohne Phasenanschnitt angesteuert.

Durch Belegen des Steuereingangs EIN des Mikrocontrollers 1 mit dem Wert 1 kann der Motor 2 während des Sanftanlaufes oder in der direkten Ansteuerung ohne Phasenanschnitt jederzeit ausgeschaltet werden. Dabei werden durch die Blöcke 48 und 51 die beiden Zündsignale ZB und ZC direkt ausgeschaltet und in Block 54 die Phasenanschnittwerte für den nächsten Sanftanlauf auf die vorgegebenen Startwerte für die Phasenanschnitte zurückgesetzt.

Da die Zündsignale der zwei gesteuerten Netzphasen aufgrund der direkten Ableitung der Zündsignale aus den Spannungsnulldurchgängen 10B und 10C der zwei gesteuerten Netzphasen des Drehstromnetzes immer automatisch der vorgegebenen Phasenfolge folgen müssen, arbeitet das hier vorgestellte interruptgesteuerte Verfahren zur zweiphasigen Phasenanschnittsteuerung eines Drehstromstellers drehsinnunabhängig.

Obwohl die vorliegende Erfindung unter Bezugnahme auf die in den beigefügten FIG 1 bis 15 dargestellten Ausführungsformen erläutert ist, sollte berücksichtigt werden, daß damit nicht beabsichtigt ist, die Erfindung nur auf die dargestellten Ausführungsformen zu beschränken, sondern alle möglichen Änderungen, Modifizierungen und äquivalente Anordnungen, soweit sie vom Inhalt der Patentansprüche gedeckt sind, einzuschließen.

## Patentansprüche

1. Drehstromsteller zur Steuerung einer an ein Drehstromnetz angeschlossenen Last (2), mit einem Mikrocontroller (1), mit Spannungserfassungseinrichtungen (3A, 3B, 3C), die den Spannungsnulldurchgängen (10A, 10B, 10C) in einzelnen Netzphasen (A, B, C) zugeordnete Spannungsnulldurchgangssignale (U0A, U0B, U0C) erzeugen, von denen der Mikrocontroller (1) Zündsignale (ZA, ZB, ZC) zur Ansteuerung von phasenbezogenen Halbleiter-Ventilen (6A, 6B, 6C) ableitet, **dadurch gekennzeichnet**, daß die Spannungsnulldurchgangssignale (U0A, U0B, U0C) Rechtecksignale sind, deren Flanken (11, 11B, 11C) zur Interruptsteuerung eines Ablaufprogramms im Mikrocontroller (1) verwendet werden, wobei die der Interruptsteuerung zugehörigen Interruptroutinen im Ablaufprogramm die Einschaltzeitpunkte der Zündsignale (ZA, ZB, ZC) ausschließlich ausgehend von den Spannungsnulldurchgängen (10A, 10B, 10C) als Information über das Drehstromnetz steuern und die Ausschaltung der Zündsignale (ZA, ZB, ZC) immer direkt nach jedem Spannungsnulldurchgang (10A, 10B oder 10C) erfolgt.

2. Drehstromsteller nach Anspruch 1, **dadurch gekennzeichnet**, daß lediglich zwei Spannungserfassungseinrichtungen (3B, 3C) vorgesehen sind, die als Spannungsnulldurchgangssignale zweier Netzphasen (B, C) Rechtecksignale (U0B, U0C) erzeugen, deren Flanken (11B, 11C) zur Interruptsteuerung durch den Mikrocontroller (1) verwendet werden.

3. Drehstromsteller nach Anspruch 1, **dadurch gekennzeichnet**, daß ein aus den Rechtecksignalen (U0A, U0B, U0C) in einer Logik (5) gebildetes Sammelinterrupt-Signal (SI) dem Mikrocontroller (1) zur Interruptsteuerung zugeführt wird.

4. Drehstromsteller nach einem der vorangehenden Ansprüche, **dadurch gekennzeichnet**, daß die Interruptsteuerung eine Interruptroutine "Spannungsnulldurchgangsinterrupt" enthält, in der ein Timer mit einem Zeitwert geladen und aktiviert wird, und daß nach Ablauf des Zeitwerts in einer betreffenden Timer-Interruptroutine das zugehörige Halbleiterventil gezündet (61) wird.

5. Drehstromsteller nach einem der vorangehenden Ansprüche, **dadurch gekennzeichnet**, daß in der Spannungsnulldurchgangs-Interruptroutine vor dem Laden des Timers das Zündsignal (ZA, ZB oder ZC) ausgeschaltet wird.

6. Drehstromsteller nach einem der vorangehenden Ansprüche, **dadurch gekennzeichnet**, daß in der Timer-Interruptroutine der Timer deaktiviert (62) wird.

7. Drehstromsteller nach einem der vorangehenden Ansprüche, **dadurch gekennzeichnet**, daß die Spannungsnulldurchgangs-Interruptroutine eine Zuordnung zwischen einer Flanke (11) des Sammelinterrupt-Signals (SI) und einem der Spannungsnulldurchgangssignale (U0A, U0B, U0C) vornimmt.

8. Verfahren zur Phasenanschnittsteuerung eines Drehstromstellers zur Steuerung einer an ein Drehstromnetz angeschlossenen Drehstromlast (2), mit einem Mikrocontroller (1), mit Spannungserfassungseinrichtungen (3A, 3B, 3C), die den Spannungsnulldurchgängen (10A, 10B, 10C) in einzelnen Netzphasen (A, B, C) zugeordnete Spannungsnulldurchgangssignale (U0A, U0B, U0C) erzeugen, von denen der Mikrocontroller (1) Zündsignale (ZA, ZB, ZC) zur Ansteuerung von phasenbezogenen Halbleiterventilen (6A, 6B, 6C) ableitet, **dadurch gekennzeichnet**, daß die Spannungsnulldurchgangserfassungseinrichtungen (3A, 3B, 3C) rechteckförmige Spannungsnulldurchgangssignale (U0A, U0B, U0C) erzeugen, die über eine Logik (5) zu einem Sammelinterrupt-Signal (SI) zusammengefaßt werden, daß entweder bei jeder negativen oder jeder positiven Flanke im Sammelinterrupt-Signal (SI) eine Verzweigung in eine Interruptroutine erfolgt, in der zunächst die Zuordnung des auslösenden Spannungsnulldurchgangs (10A, 10B, oder 10C) zu einer der Netzphasen (A, B oder C) erfolgt und dann für die zugeordnete Netzphase ein Timer-Interrupt gesteuerter Ablauf zur Erzeugung eines Zündsignals (ZA, ZB, ZC) für das Halbleiter-Ventil (6A, 6B, 6C) der betreffenden Netzphase eingeleitet wird.

## Claims

1. Three-phase power controller for controlling a load (2) which is connected to a three-phase mains system, having a microcontroller (1), having voltage detection devices (3A, 3B, 3C) which produce voltage zero crossing signals (U0A, U0B, U0C) which are associated with the voltage zeroes (10A, 10B, 10C) in the individual mains-system phases (A, B, C), from which signals the microcontroller (1) derives trigger signals (ZA, ZB, ZC) for driving phase-related semiconductor valves (6A, 6B, 6C), characterized in that the voltage zero crossing signals (U0A, U0B, U0C) are square-wave signals whose flanks (11, 11B, 11C) are used for interrupt control of an executive program in the microcontroller (1), the interrupt routines which are associated with the interrupt control in the executive program controlling the switch-on times of the trigger signals (ZA, ZB, ZC) exclusively on the basis of the voltage zero crossings (10A, 10B, 10C) as information about the three-phase mains system, and the trigger signals (ZA, ZB, ZC) always being switched off directly after each voltage zero crossing (10A, 10B or 10C).

2. Three-phase power controller according to Claim 1, characterized in that only two voltage detection devices (3B, 3C) are provided which produce, as voltage zero crossing signals of two mains-system phases (B, C), square-wave signals (U0B, U0C) whose flanks (11B, 11C) are used for interrupt control by the microcontroller (1).

3. Three-phase power controller according to Claim 1, characterized in that a common interrupt signal (SI), which is formed from the square-wave signals (U0A, U0B, U0C) in a logic device (5), is supplied to the microcontroller (1) for interrupt control.

4. Three-phase power controller according to one of the preceding claims, characterized in that the interrupt control includes a "voltage zero crossing interrupt" interrupt routine, in which a timer is loaded with a time value and is activated, and in that once the time value in a relevant timer interrupt routine has elapsed, the associated semiconductor valve is triggered (61).

5. Three-phase power controller according to one of the preceding claims, characterized in that the trigger signal (ZA, ZB or ZC) is switched off in the voltage zero crossing interrupt routine before the loading of the timer.

6. Three-phase power controller according to one of the preceding claims, characterized in that the timer is deactivated (62) in the time interrupt routine.

7. Three-phase power controller according to one of the preceding claims, characterized in that the voltage zero crossing interrupt routine produces an association between one flank (11) of the common interrupt signal (SI) and one of the voltage zero crossing signals (U0A, U0B, U0C).

8. Method for phase-gating the control of a three-phase power controller for controlling a three-phase load (2) which is connected to a three-phase mains system, having a microcontroller (1), having voltage detection devices (3A, 3B, 3C) which produce voltage zero crossing signals (U0A, U0B, U0C) which are associated with the voltage zero crossings (10A, 10B, 10C) in the individual mains-system phases (A, B, C), from which signals the microcontroller (1) derives trigger signals (ZA, ZB, ZC) for driving phase-related semiconductor valves (6A, 6B, 6C), characterized in that the voltage zero crossing detection devices (3A, 3B, 3C) produce square-wave voltage zero crossing signals (U0A, U0B, U0C), which are combined via a logic device (5) to form a common interrupt signal (SI) in that a jump is made to an interrupt routine either on each negative flank or on each positive flank in the common interrupt signal (SI), in which interrupt routine the triggering voltage zero crossing (10A, 10B or 10C) is first of all assigned one of the mains-system phases (A, B or C), and a timer-interrupt-controlled sequence is then initiated for the associated mains-system phase, in order to produce a trigger signal (ZA, ZB, ZC) for the semiconductor valve (6A, 6B, 6C) for the relevant mains-system phase.

## Revendications

1. Régulateur de courant triphasé pour la commande d'une charge (2) raccordée à un réseau de courant triphasé, comportant un microcontrôleur (1) et des dispositifs de détection de tension (3A, 3B, 3C) qui produisent des signaux de passage par zéro de la tension (U0A, U0B, U0C) qui sont associés aux passages par zéro de la tension (10A, 10B, 10C) dans les différentes phases de réseau (A, B, C) et à partir desquels le microcontrôleur (1) déduit des signaux d'allumage (ZA, ZB, ZC) pour la commande de valves à semi-conducteurs (6A, 6B, 6C) rapportées aux phases, caractérisé par le fait que les signaux de passage par zéro de la tension (U0A, U0B, U0C) sont des signaux rectangulaires dont les flancs (11A, 11B, 11C) sont utilisés pour la commande par interruption d'un programme séquentiel dans le microcontrôleur (1), les routines d'interruption qui appartiennent à la commande par interruption dans le programme séquentiel commandant alors les instants de branchement des signaux d'allumage (ZA, ZB, ZC) exclusivement à partir des passages par zéro de la tension (10A, 10B, 10C) comme information sur le réseau de courant triphasé et le débranchement des signaux d'allumage (ZA, ZB, ZC) s'effectuant toujours directement après chaque passage par zéro de la tension (10A, 10B ou 10C).

2. Régulateur de courant triphasé selon la revendication 1, caractérisé par le fait qu'il est prévu simplement deux dispositifs de détection de tension (3B, 3C) qui produisent comme signaux de passage par zéro de la tension de deux phases de réseau (B, C) des signaux rectangulaires (U0B, U0C) dont les flancs (11B, 11C) sont utilisés pour la commande par interruption par le microcontrôleur (1).

3. Régulateur de courant triphasé selon la revendication 1, caractérisé par le fait qu'un signal d'interruption collectif (SI) formé à partir des signaux rectangulaires (U0A, U0B, U0C) dans une unité logique (5) est envoyé au microcontrôleur (1) pour la commande par interruption.

4. Régulateur de courant triphasé selon l'une des revendications précédentes, caractérisé par le fait que la commande par interruption contient une routine d'interruption "interruption par passage par zéro de la tension" dans laquelle un temporisateur est chargé avec une valeur temporelle et est activé et que, après l'écoulement de la valeur temporelle, dans une routine d'interruption par temporisateur concernée, la valve à semi-conducteurs associée est allumée (61).

5. Régulateur de courant triphasé selon l'une des revendications précédentes, caractérisé par le fait que, dans la routine d'interruption par passage par zéro de la tension, le signal d'allumage (ZA, ZB ou ZC) est débranché avant le chargement du temporisateur.

6. Régulateur de courant triphasé selon l'une des revendications précédentes, caractérisé par le fait que le temporisateur est désactivé (62) dans la routine d'interruption par temporisateur.

7. Régulateur de courant triphasé selon l'une des revendications précédentes, caractérisé par le fait que la routine d'interruption par passage par zéro de la tension effectue une association entre un flanc (11) du signal d'interruption collectif (SI) et l'un des signaux de passage par zéro de la tension (U0A, U0B, U0C) .

8. Procédé pour la commande par coupe de phases d'un régulateur de courant triphasé pour la commande d'une charge en courant triphasé (2) raccordée à un réseau de courant triphasé, comportant un microcontrôleur (1) et des dispositifs de détection de tension (3A, 3B, 3C) qui produisent des signaux de passage par zéro de la tension (U0A, U0B, U0C) qui sont associés aux passages par zéro de la tension (10A, 10B, 10C) dans les différentes phases de réseau (A, B, C) et à partir desquels le microcontrôleur (1) déduit des signaux d'allumage (ZA, ZB, ZC) pour la commande de valves à semi-conducteurs (6A, 6B, 6C) rapportées aux phases, caractérisé par le fait que les dispositifs de détection de passage par zéro de la tension (3A, 3B et 3C) produisent des signaux de passage par zéro de la tension (U0A, U0B, U0C) rectangulaires qui sont regroupés en un signal d'interruption collectif (SI) par l'intermédiaire d'une unité logique (5) et que, soit pour chaque flanc négatif soit pour chaque flanc positif dans le signal d'interruption collectif (SI), on effectue un saut dans une routine d'interruption dans laquelle on effectue d'abord l'association du passage par zéro de la tension (10A, 10B ou 10C) déclenchant à l'une des phases de réseau (A, B ou C) et on déclenche ensuite pour la phase de réseau associée une séquence commandée par interruption par temporisateur pour produire un signal d'allumage (ZA, ZB, ZC) pour la valve à semi-conducteurs (6A, 6B, 6C) de la phase de réseau concernée.
